# EUROPÄISCHE PATENTANMELDUNG

(11) **EP 0 545 044 A2**
(43) Veröffentlichungstag der Anmeldung: **09.06.1993**
(21) Anmeldenummer: 92117558.4
(22) Anmeldetag: 14.10.1992
(51) Int. Cl.: A23G 3/26, A61J 3/00, B01J 2/00

(54) **Vorrichtung zum Dragieren von stückigen Produkten, insbesondere Pillen und Tabletten**

(30) Priorität: 27.11.1991 DE 4138997
(71) Anmelder: Bohle, Lorenz B., Dipl.-Ing., D-59303 Ennigerloh (DE)
(72) Erfinder: Bohle, Lorenz B., Dipl.-Ing., D-59303 Ennigerloh (DE)
(74) Vertreter: Kern, Wolfgang, Dipl.-Ing.

(57) **Zusammenfassung**

2.1. Die aus der Praxis bekannten Vorrichtungen zum Dragieren von stückigen Produkten sind in der Regel umständlich und mit großem Zeitaufwand zu reinigen. Daraus ergeben sich verhältnismäßig lange Standzeiten der Vorrichtung, so daß einer wirtschaftlichen Verarbeitung der Produkte enge Grenzen gesetzt sind. Die neue Vorrichtung soll einfacher zu betreiben sein und kürzere betriebsbedingte Standzeiten benötïgen.

2.2. Bei der erfindungsgemäßen Vorrichtung (1) erstrecken sich die Abluftkanäle (22) längs zumindest eines Teils der Innenwand (25) der Trommel (3) und sind mit dieser lösbar verbunden. Dadurch können die Abluftkanäle leicht von der Trommel demontiert und außerhalb dieser gereinigt werden.

2.3. Dragieren von stückigen Produkten, wie z.B. Pillen und Tabletten.

## Beschreibung

Die Erfindung bezieht sich auf eine Vorrichtung zum Dragieren von stückigen Produkten, insbesondere Pillen und Tabletten, nach dem Oberbegriff des Anspruchs 1.

Eine solche Vorrichtung ist aus der DE-OS 22 49 863 bekannt. Bei dieser Vorrichtung weist die Trommel regelmäßig in Umfangsrichtung verteilte Luftdurchtrittsöffnungen auf, die jeweils durch ein in Richtung auf ihre Schließstellung belastetes Ventil verschlossen sind. Zum Innenraum der Trommel hin ist jede Luftdurchtrittsöffnung und damit jedes Ventil mittels eines Kanals abgedeckt, der eine Vielzahl von Luftdurchtrittsöffnungen aufweist. Außerdem ist ein sogenannter Windkasten vorgesehen, der mit einem Teil der Außenwandung der Trommel in engem Kontakt steht. Die Zuluft wird über den Windkasten und über die jeweils mit dem Windkasten verbundenen Durchtrittsöffnungen in der Trommel über den die jeweilige Luftdurchtrittsöffnung abdeckenden Luftkanal in den Innenraum der Trommel eingeblasen. Durch den auf den Ventildeckel wirkenden Luftdruck wird dieser angehoben und gibt dadurch den Strömungsquerschnitt der jeweiligen Luftdurchtrittsöffnung frei. Nahe der Längsachse der Trommel ist ein Abluftkanal vorgesehen, durch den die Abluft abgezogen wird.

Zum Dragieren, d.h. zum Überziehen bzw. Beschichten von stückigen Produkten mit unterschiedlichen Überzugsstoffen ist eine sorgfältige Reinigung des gesamten Innenraums der Trommel unumgänglich. Dazu ist es häufig notwendig, die Außenverkleidung der Trommel zu demontieren, damit beispielsweise die Ventilsitze und -deckel, aber auch die Luftdurchtrittsöffnungen in der Trommelwand und in den Luftkanälen einfacher zugänglich und damit besser zu säubern sind.

Eine solche Vorgehensweise erfordert letztlich einen großen Zeitaufwand. Aufgrund der damit verbundenen langen Standzeiten der Vorrichtung ist in der Regel mit hohen Betriebskosten zu rechnen.

Bei der bekannten Vorrichtung befindet sich die Einrichtung zum Besprühen der Produkte innerhalb der Produktcharge. Bei ungünstigen Strömungsverhältnissen ist deshalb ein Mitreißen des Überzugsstoffes durch die radial durch die Produktcharge strömende Luft nicht ausgeschlossen. Ein Verunreinigen des Abluftkanals und des gesamten Abluftsystems ist bei der bekannten Vorrichtung nicht wirksam verhindert. Dadurch kann es bei der Reinigung der Vorrichtung ebenfalls zu verlängerten Standzeiten und damit erhöhten Kosten kommen.

Der Erfindung liegt die Aufgabe zugrunde, eine Vorrichtung der eingangs angegebenen Art zu schaffen, die einfacher zu betreiben ist und bei der es weniger leicht zu betriebsbedingten längeren Standzeiten kommen kann.

Diese Aufgabe wird erfindungsgemäß bei einer Vorrichtung der o.g. Art durch die kennzeichnenden Merkmale des Anspruchs 1 gelöst.

Da sich der Abluftkanal längs zumindest eines Teils der Innenwand der Trommel erstreckt, entfallen die beim vorbeschriebenen Stand der Technik in der Trommelwand vorgesehenen Luftdurchtrittsöffnungen vollständig. Dadurch kann der Reinigungsaufwand beträchtlich reduziert werden.

Jeder Abluftkanal ist ferner lösbar mit der Innenwand verbunden, so daß er leicht demontierbar und beispielsweise über eine Trommelöffnung aus der Trommel herausnehmbar ist. Außerhalb der Trommel ist die Reinigung der Luftdurchtrittsöffnungen des Abluftkanals sehr viel leichter und schneller als innerhalb der Trommel möglich. Dadurch kann es weniger leicht zu einer Verunreinigung der nächstfolgenden Produktcharge kommen. Die Reinigungssicherheit ist damit erhöht.

Vorteilhafterweise erstreckt sich der wenigstens eine Abluftkanal nahezu über die gesamte Länge der Innenwand der Trommel. Damit ist eine sorgfältige und gezielte Luftzu- und -abfuhr zu bzw. von der Produktcharge sichergestellt. Auch kleinere Produktmengen, die sich in Randbereichen der Trommel befinden, sind ohne weiteres mit der Luft beaufschlagbar.

Gemäß einer vorteilhaften Weiterbildung weist der wenigstens eine Abluftkanal mehrere miteinander verbundene, in Längsrichtung der Trommel hintereinander angeordnete Abschnitte auf. Die Demontage des Abluftkanals ist erleichtert, da dieser auch durch eine kleine Trommelöffnung leicht aus dem Innenraum der Trommel herausnehmbar ist. Die Ausbildung des Abluftkanals mit mehreren Abschnitten vereinfacht zudem die Anpassung des Abluftkanals an die Kontur der Trommelinnenwand.

Gemäß einer anderen Weiterbildung ist der wenigstens eine Abluftkanal als Schikane, vorzugsweise im Fischgrätenmuster, zur Durchmischung der Produkte ausgebildet. Der Abluftkanal kann also im Sinne einer Doppelwirkung einerseits zum Abziehen der Luft aus dem Innenraum der Trommel, andererseits als Mischerflügel dienen, so daß zusätzliche Einbauten, die bei einem Wechsel der Produktcharge und des Überzugsstoffes ebenfalls zu reinigen sind, entfallen können.

Vorzugsweise sind mehrere in Umfangsrichtung gleichmäßig über die Innenwand der Trommel verteilte Abluftkanäle vorgesehen. Dadurch ist eine gleichmäßige Luftabfuhr von der Produktcharge und damit eine schnelle Trocknung der dragierten Produkte gewährleistet.

Günstig ist ferner, daß jeder Abluftkanal einen zumindest dreieckigen Querschnitt aufweist, und die Luftdurchtrittsöffnungen in einer oder mehreren der zum Innenraum der Trommel weisenden Seitenwand/Seitenwände des Kanals angeordnet sind, wobei vorzugsweise die in Drehrichtung der Trommel vordere Seitenwand des wenigstens einen Abluftkanals mit der einen Teil des Abluftkanals bildenden Innenwand der Trommel einen größeren Winkel als die in Drehrichtung hintere Seitenwand einschließt. Dadurch ist die Luftverteilung in der Produktcharge gezielt steuerbar, so daß letztlich eine homogenere Absaugung der Luft möglich ist. Durch die größere Neigung der in Drehrichtung der Trommel vorderen Seitenwand im Vergleich zur hinteren Seitenwand des Abluftkanals ist eine gute Förderwirkung des Kanals und damit eine gute Durchmischung der zu dragierenden Produkte ermöglicht, da diese bei einer Drehung der Trommel höher an der Innenwand aufrollen und dadurch bedingt ebenfalls länger an der Innenseite zum unteren Totpunkt der Trommel hin abrollen. Dadurch verringert sich ferner die sich in radialer Richtung der Trommel erstreckende Dicke der Produktschicht, so daß die durch das Produkt strömende Luft einen geringeren Druckverlust erleidet, was letztlich den Energieverbrauch der Vorrichtung verringert.

Vorteilhafterweise ist die Anzahl und/oder die Form der Luftdurchtrittsöffnungen über die Länge des wenigstens einen Abluftkanals derart festgelegt, daß die Gesamtfläche der Luftdurchtrittsöffnungen in einem bestimmten Abschnitt des Kanals der Menge der diesem Abschnitt zugeordneten Produkte etwa proportional ist. Mittels dieser Weiterbildung der Erfindung ist eine gleichmäßige Luftströmung durch die Produkte auf einfache Weise ermöglicht, da Orte geringer Produktkonzentration nur wenige Luftdurchtrittsöffnungen, hingegen Orte hoher Produktkonzentration zahlreiche Luftdurchtrittsöffnungen aufweisen.

Vorzugsweise wird die Abluft dann aus dem Abluftkanal abgezogen, wenn sich dieser im Bereich der unteren Totpunktlage der Trommel befindet. Dadurch ist sichergestellt, daß die Luft in jedem Fall durch die Produktcharge und nicht an dieser vorbei zum Abluftkanal strömt.

Gemäß einer anderen Weiterbildung des Erfindungsgegenstandes weist die Einrichtung zum Zuführen der Luft in die Trommel einen Zuluftkanal auf, der einen parallel zur Längsachse der Trommel sich erstreckenden ersten Abschnitt und wenigstens einen damit verbundenen, etwa in der Längsmitte der Trommel zur Innenwand der Trommel hin umgebogenen zweiten Abschnitt hat, dessen freies Ende düsenartig ausgebildet ist und zumindest beim Dragieren der Produkte in die Produktcharge hineinreicht.

Mit dieser Maßnahme ist der Betrieb der Vorrichtung weiter verbessert, da es im Innenraum der Trommel ausserhalb der Produktcharge nicht mehr zu einer turbulenten Strömung und damit zu einem sonst möglichen unerwünschten Antrocknen des Überzugsstoffes auf dessen Weg zum Produkt kommen kann. Aufgrund des direkten Einleitens der Luft in die Produktcharge ist aber auch die Luftdurchmischung der Charge verbessert, so daß die mit dem Überzugsstoff versehenen Produkte schneller getrocknet werden können. Die Luftdurchmischung wird aber auch dadurch günstig beeinflußt, daß das freie Ende des zweiten Abschnitts des Zuluftkanals derart angeordnet und ausgebildet ist, daß die Luft etwa tangential in das in der Trommel abrollende Produkt eingeleitet wird.

Gemäß einer bevorzugten Weiterbildung der Vorrichtung ist die Länge des ersten Abschnitts und die Länge des sich quer zur Längsachse der Trommel erstreckenden zweiten Abschnitts des Zuluftkanals mittels Teleskopführungen veränderbar. Dadurch kann der Zuluftkanal bei einer Vielzahl von Vorrichtungen mit unterschiedlicher Trommelgröße verwendet werden. Außerdem ist der Zuluftkanal an die Produktmenge anpaßbar, so daß auch bei einer geringen Produktmenge ein direktes Einleiten der Zuluft in die Produktcharge sichergestellt ist.

Gemäß einer anderen Weiterbildung weist die Einrichtung zum Besprühen der Produkte einen Sprühkanal auf, dessen eines Ende an einem die Trommel verschließenden Deckel gehalten ist und dessen anderes, freies Ende etwa in der Längsmitte der Trommel zur Innenwand der Trommel hin umgebogen, düsenartig ausgebildet sowie oberhalb der Produktcharge und zu dieser weisend angeordnet ist. Der Sprühkanal kann also gleichzeitig mit dem Deckel von der Trommel entfernt werden. Dadurch wird die Standzeit der Vorrichtung weiter reduziert. Vorteilhafterweise ist das eine Ende des Sprühkanals mittels einer Teleskopführung an dem Deckel befestigt, so daß auch der Sprühkanal auf einfache Weise an die Länge der jeweiligen Trommel anpaßbar ist. Für Trommeln unterschiedlicher Größe können damit jeweils gleiche Sprühkanäle verwendet werden.

Vorteilhafterweise ist der Zuluft- und Abluftkanal mit dem einen Ende der Trommel und der Sprühkanal mit dem durch den Deckel verschließbaren, gegenüberliegenden anderen Ende der Trommel verbunden. Die Anschlüsse für Zu- und Abluft können dadurch in geringem Abstand voneinander angeordnet sein, so daß die gesamte Einrichtung zum Zu- und Abführen der Luft nur einen geringen Platzbedarf benötigt. Da die Einrichtung zum Zu- und Abführen der Luft und die Einrichtung zum Besprühen der Produkte an unterschiedlichen Enden der Trommel angeordnet sind, kann es weniger leicht zu gegenseitigen Behinderungen kommen, wenn Einstell- oder Wartungsarbeiten sowohl an der einen als auch an der anderen Einrichtung vorgenommen werden.

Ein Ausführungsbeispiel des Erfindungsgegenstandes wird nachfolgend an Hand der Zeichnung näher erläutert.
Es zeigen:
- Fig. 1: eine schematische Seitenansicht einer Vorrichtung zum Dragieren von stückigen Produkten in einer drehbaren Trommel;
- Fig. 2: einen Schnitt entlang der Linie II-II in Fig. 1; und
- Fig. 3: eine schematische teilweise Draufsicht auf die Vorrichtung gemäß Fig. 1, wobei ein Teil der Mantelfläche der Trommel weggelassen ist.

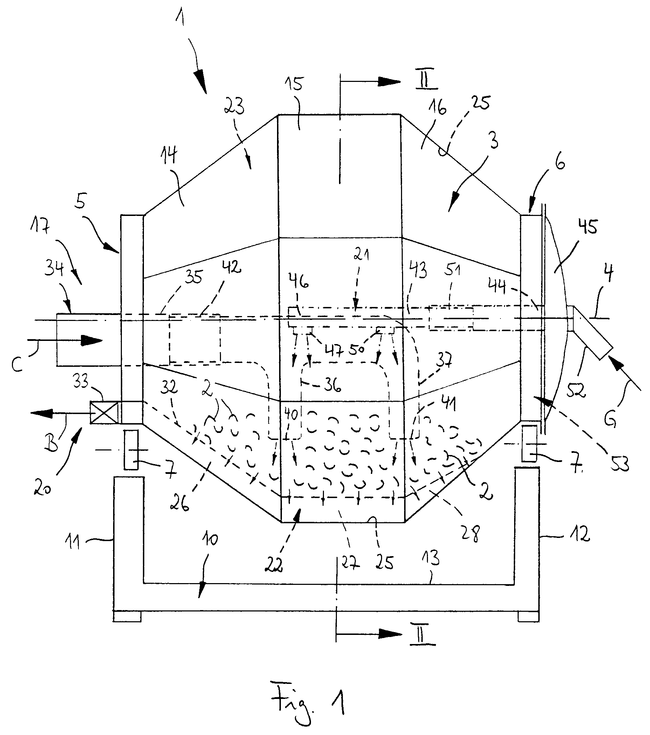

Eine Vorrichtung 1 zum Dragieren von stückigen Produkten 2 ist in einer schematischen Seitenansicht in Fig.1 dargestellt. Die Vorrichtung dient vorzugsweise zum Überziehen von stückigen, d.h. granulatförmigen oder partikelförmigen Produkten der pharmazeutischen Industrie, wie z.B. Tabletten und Pillen, oder von Produkten aus der Lebensmittelindustrie, wie z.B. Bonbons.

Die Vorrichtung 1 weist gemäß Fig. 1 eine drehbare Trommel 3 mit einer horizontalen Längsachse 4 auf. Die Trommel 3 ist an ihrem einen Ende 5 und an ihrem anderen Ende 6 auf Rollen oder Walzen 7 drehbar gelagert, die einen Teil einer Halterung 10 für die Trommel bilden. Die Halterung 10 besteht aus zwei voneinander beabstandeten vertikalen Halteböcken 11, 12, an deren Oberseiten vorzugsweise jeweils mehrere Walzen 7 drehbar befestigt sind und deren Unterseiten auf einem nicht dargestellten Boden abgestützt und miteinander durch wenigstens einen Träger 13 verbunden sind.

Die Vorrichtung umfaßt ferner eine nicht dargestellte Antriebseinheit zum Drehen der Trommel. Diese kann über eine der Walzen 7 direkt auf die Trommel oder indirekt über einen Antriebsriemen auf die Trommel 3 wirken.

Gemäß Fig. 1 hat die Trommel 3 einen mit dem einen Ende 5 einstückig verbundenen ersten kegelstumpfartigen Abschnitt 14, einen sich daran anschließenden vieleckigen Mittelabschnitt 15 sowie einen mit dem Mittelabschnitt verbundenen zweiten kegelstumpfartigen Abschnitt 16, an den sich das andere Ende 6 der Trommel anschließt. Anstelle des zuvor beschriebenen vieleckigen Querschnitts der Trommel kann diese auch einen runden Querschnitt aufweisen.

Die Vorrichtung 1 umfaßt ferner eine Einrichtung 17 zum Zuführen von Luft in die Trommel 3, eine Einrichtung 20 zum Abführen von Luft aus der Trommel sowie eine Einrichtung 21 zum Besprühen der in der Trommel befindlichen Produkte mit einem Überzugsstoff. Die Einrichtungen 17 und 20 zum Zu- bzw. Abführen der Luft sind in Fig. 1 teilweise gestrichelt dargestellt, während die Einrichtung 21 zum Besprühen der Produkte strichpunktiert angedeutet ist.

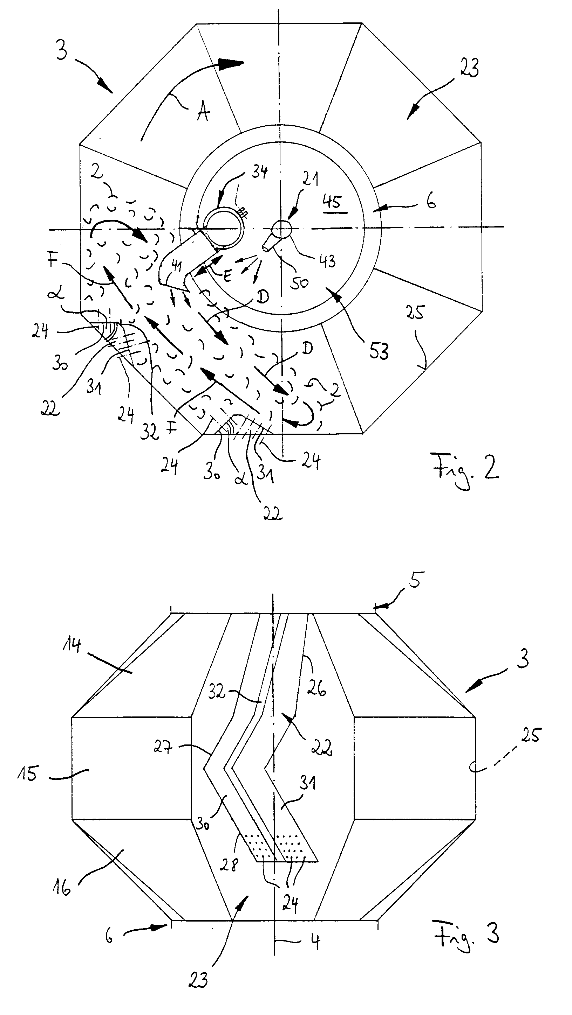

Erfindungsgemäß ist die Einrichtung 20 zum Abführen von Luft aus der Trommel 3 in besonderer Weise ausgestaltet. Die Einrichtung 20 weist mehrere Abluftkanäle 22 auf, von denen in Fig. 1 der Einfachheit halber lediglich der am unteren Totpunkt der Trommel befindliche Kanal angedeutet ist. Jeder Abluftkanal 22 hat eine Vielzahl von zum Innenraum 23 der Trommel 3 hin weisende Luftdurchtrittsöffnungen 24, von denen einige am freien Ende des in Fig. 3 dargestellten Abluftkanals 22 angedeutet sind. Üblicherweise sind die Luftdurchtrittsöffnungen 24 teilweise entgegen der Darstellung in Fig.3 über die gesamte Länge und über die Breite des Abluftkanals 22 verteilt angeordnet.
Jeder Abluftkanal 22 erstreckt sich längs zumindest eines Teils der Innenwand 25 der Trommel 3, wobei gemäß Fig. 1 die Länge des Abluftkanals 22 nahezu der gesamten Länge der Innenwand 25 entspricht. Lediglich an dem zum anderen Ende 6 der Trommel weisenden Teil des zweiten kegelstumpfartigen Abschnitts 16 ist gemäß den Fig. 1 und 3 kein Abluftkanal vorgesehen, da sich in diesem Bereich normalerweise kein Produkt befindet. Es ist aber auch möglich, die Länge des Abluftkanals entsprechend der Länge der Innenwand 25 auszubilden.

Es ist klar, daß die Luftdurchtrittsöffnungen 24 unterschiedlichste Querschnitte aufweisen können. Sie können vor allem rund, dreieckig, vier- oder mehreckig, ellipsenförmig oder in Form eines Langlochs geformt sein, wobei die Form des Querschnitts vorzugsweise derart gewählt ist, daß die zu dragierenden Produkte nicht in den Hohlraum der Abluftkanäle eindringen können. Bei einer bevorzugten Weiterbildung des Erfindungsgegenstandes weist jeder Abluftkanal 22 mehrere miteinander verbundene, in Längsrichtung der Trommel 3 hintereinander angeordnete Abschnitte 26, 27, 28 auf. Die Verbindung der einzelnen Abschnitte untereinander sowie zur Innenwand 25 kann auf vielfältige Weise erfolgen, so z.B. über eine Schraubenbolzen/Mutter-Verbindung oder über Schnappelemente. Es ist ferner möglich, die Abschnitte 26, 27, 28 miteinander zu verhaken. Solche Verbindungen können, falls der Abluftkanal gereinigt werden soll, besonders schnell gelöst werden.

Gemäß den Fig. 1 und 3 ist der Abluftkanal 22 als Schikane im Fischgrätenmuster zur Durchmischung der Produkte bei rotierender Trommel ausgebildet. Vorzugsweise wird die Form der Schickane so gewählt, daß eine gleichmäßige und intensive Durchmischung der zu dragierenden Produkte erfolgt. Die Abluftkanäle 22 sind in Umfangsrichtung gleichmäßig über die Innenwand 25 der Trommel 3 verteilt angeordnet (nicht näher gezeigt), wobei jeder Abluftkanal 22 einen viereckigen Querschnitt aufweist und die Luftdurchtrittsöffnungen in zwei der zum Innenraum 23 der Trommel weisenden Seitenwänden 30, 31 des Kanals angeordnet sind. Die Anzahl der Abluftkanäle richtet sich etwa nach der Größe der Trommel. Bei kleinen Trommeln sind etwa vier Abluftkanäle, bei größeren Trommeln 8 oder mehr Abluftkanäle erforderlich. Der Querschnitt jedes Abluftkanals 22 kann aber auch dreieckig oder mehreckig sein. Es ist ferner möglich, die Luftdurchtrittsöffnungen nur in einer der beiden Seitenwände 30, 31 oder zusätzlich oder allein in einem die beiden Seitenwände miteinander verbindenden Steg 32 vorzusehen.

Die in Drehrichtung (siehe Pfeil A in Fig. 2) der Trommel 3 vordere Seitenwand 30 der gezeigten Abluftkanäle 22 schließt mit der einen Teil des Abluftkanals bildenden Innenwand 25 der Trommel einen größeren Winkel α ein als die in Drehrichtung hintere Seitenwand 31.

Die Anzahl und/oder die Form der Luftdurchtrittsöffnungen 24 ist über die Länge der Abluftkanäle 22 derart festgelegt, daß die Gesamtfläche der Abluftdurchtrittsöffnungen 24 in einem bestimmten Abschnitt des Kanals der Menge der diesem Abschnitt zugeordneten Produkte etwa proportional ist. Daraus folgt, daß die Luftdurchtrittsöffnungen insbesondere in den Randbereichen der Abschnitte 26 und 28 der Trommel 3 einen kleineren Querschnitt haben als im Bereich des mittleren Abschnitts 27, dem die größte Produktmenge zugeordnet ist. Um die Abluft gleichmäßig aus der Produktcharge abzuziehen, kann die jedem Abschnitt des Abluftkanals zugeordnete Fläche der Luftdurchtrittsöffnungen mit dem Abstand des betreffenden Abschnitts von einem Absaugstutzen 33 zunehmen. Dadurch bleibt der beim Durchströmen der einzelnen Abschnitte 26, 27, 28 des Abluftkanals 22 auftretende Druckverlust etwa gleich groß.

Fig. 1 verdeutlicht, daß die Abluft in Richtung des Pfeils B dann aus dem Abluftkanal 22 abgezogen wird, wenn sich dieser im Bereich der unteren Totpunktlage der Trommel 3 befindet. In dieser Stellung ist der dem einen Ende 5 der Trommel 3 zugeordnete Teil des Abschnitts 26 des Abluftkanals 22 strömungstechnisch mit dem Absaugstutzen 33 verbunden. Dabei kann sich der Absaugstutzen 33 über einen Teil des Umfangs des Endes 5 der Trommel erstrecken, so daß der Abluftkanal 22 über einen längeren Zeitraum an den Absaugstutzen 33 angeschlossen ist und sich dabei auf einer Teilkreisbahn um die Längsachse 4 bewegt.

Gemäß den Fig. 1 und 2 weist die Einrichtung 17 zum Zuführen der Luft in die Trommel 3 einen Zuluftkanal 34 auf, in den die Zuluft in Richtung des Pfeils C mit Hilfe eines nicht dargestellten Gebläses einströmt. Der Zuluftkanal 34 hat einen parallel zur Längsachse 4 der Trommel sich erstreckenden ersten Abschnitt 35 und gemäß Fig. 1 zwei damit verbundene, etwa in der Längsmitte der Trommel zur Innenwand 25 hin umgebogene zweite Abschnitte 36, 37, deren freie Enden 40, 41 düsenartig ausgebildet sind (nicht näher dargestellt). Die Länge der zweiten Abschnitte 36, 37 ist gemäß den Fig. 1 und 2 so gewählt, daß die freien Enden 40, 41 des Zuluftkanals 34 zumindest beim Dragieren der Produkte 2 in die Produktcharge hineinreichen. Fig. 2 verdeutlicht ferner, daß das freie Ende 41 des zweiten Abschnitts 37 derart angeordnet und ausgebildet ist, daß die Luft etwa tangential in das in der Trommel abrollende Produkt (siehe Pfeile D) eingeleitet wird. Dazu ist das freie Ende 41 entsprechend ausgeformt. Das gleiche gilt vorzugsweise auch für das freie Ende 40 des zweiten Abschnitts 36. Es ist aber auch möglich, lediglich einen zweiten Abschnitt oder auch mehr als zwei Abschnitte zum Zuführen der Luft in das Produkt vorzusehen.

Um die Abmessungen des Zuluftkanals an die Trommelgröße bzw. die zu dragierende Produktmenge anzupassen, ist die Länge des ersten Abschnitts 35 mittels einer Teleskopführung 42 veränderbar. Ebenso kann auch die Länge der sich quer zur Längsachse 4 der Trommel erstreckenden zweiten Abschnitte 36 und 37 mittels solcher Führungen einstellbar sein (in Fig. 2 an Hand des Doppelpfeils E angedeutet).

Gemäß Fig. 1 weist die Einrichtung 21 zum Besprühen der Produkte einen Sprühkanal 43 auf, dessen eines Ende 44 an einem die Trommel 3 verschließenden Deckel 45 gehalten ist. Das andere, freie Ende 46 des Sprühkanals 43 ist etwa in der Längsmitte der Trommel 3 zur Innenwand 25 der Trommel hin umgebogen, düsenartig ausgebildet (siehe Fig. 2) sowie oberhalb der Produktcharge und zu dieser weisend angeordnet. Gemäß Fig. 1 weist der Sprühkanal 43 zusätzlich zu der am freien Ende 46 des Sprühkanals 43 angeordneten Sprühstelle 47 eine weitere Sprühstelle 50 auf, die näher zum Deckel 45 weisend an dem Sprühkanal 43 angeordnet ist. Vorzugsweise sind die Sprühstellen 47, 50 derart angebracht, daß das Produkt 2 gleichmäßig mit dem Überzugstoff besprüht werden kann.

Gemäß Fig. 1 ist der Sprühkanal 43 im Bereich seines einen Endes 44 mittels einer Teleskopführung 51 an dem Deckel 45 befestigt, so daß auch die Länge der Einrichtung 21 zum Besprühen der Produkte leicht an die Trommelgröße anpaßbar ist. Es ist ferner möglich, den Abstand der Sprühstellen 47, 50 vom Produkt 2 mittels einer derartigen Führung variieren zu können.

Fig. 1 verdeutlicht ferner, daß der Zuluft- und der Abluftkanal 34, 22 mit dem einen Ende 5 der Trommel 3 und der Sprühkanal 43 mit dem durch den Deckel 45 verschließbaren gegenüberliegenden anderen Ende 6 der Trommel 3 verbunden ist. Dadurch sind die jeweiligen Anschlüsse an das Luftsystem einerseits und an die Sprüheinrichtung andererseits getrennt voneinander zugänglich.

Nachfolgend wird der Betrieb der zuvor beschriebenen Vorrichtung näher erläutert.

Das zu dragierende Produkt 2 wird über das Ende 6 in den Innenraum 23 der Trommel 3 eingefüllt. Anschließend wird die Länge des Zuluftkanals 34 und des Sprühkanals 43 mit Hilfe der Teleskopführung 42, 51 an die Trommelgröße und die Produktmenge angepaßt. Auch das freie Ende 40, 41 des Zuluftkanals wird derart ausgerichtet, daß es zumindest beim Dragieren der Produkte in die in der Trommel abrollende Produktmenge (siehe Pfeile D in Fig. 2) hineinreicht. Dazu kann der zweite Abschnitt 36, 37 des Zuluftkanals 34 längs der Pfeile E verschoben werden.

Der Deckel 45 wird beispielsweise mit Hilfe von Schraubenbolzen/Mutter- oder Schnapp-Verbindungen an dem Ende 6 der Trommel 3 befestigt. Der Zuluftkanal 34, der Absaugstutzen 33 des Abluftkanals 22 und ein Stutzen 52 für den Sprühkanal 43 werden an ein Gebläse bzw. an einen mit einer Fördereinrichtung versehenen Vorratsbehälter für den Überzugsstoff angeschlossen.

Die Trommel 3 wird nun mit Hilfe einer nicht dargestellten Antriebseinheit in Drehung versetzt (siehe Pfeil A in Fig. 2). Aufgrund der Drehung der Trommel fördern die Abluftkanäle 22 das Produkt entlang der Pfeile F, so daß dieses zunächst an der Innenwand 25 der Trommel aufrollt und nachfolgend an der radial innenliegenden Seite entlang der Pfeile D abrollt. Das Produkt bewegt sich also entlang einer geschlossenen Bahn.

Nunmehr wird der Überzugsstoff entlang dem Pfeil G über den Stutzen 52 durch den Deckel 45 in den Sprühkanal 43 eingeleitet und über die Sprühstellen 47, 50 dem Produkt zugeleitet. Anschließend oder gleichzeitig wird Warmluft entlang des Pfeils C in Fig. 1 durch den Zuluftkanal 34 über die freien Enden 40, 41 in das radial innen abrollende Produkt eingeleitet. Die warme Luft durchströmt intensiv die Produktcharge und trocknet dabei die auf das Produkt aufgebrachte Überzugsschicht, z.B. eine Lack- oder Schokoladenschicht. Über die Luftdurchtrittsöffnungen 24 gelangt die Luft in den jeweils im Bereich des unteren Totpunkts der Trommel angeordneten Abluftkanal 22 und wird über den Absaugstutzen 33 entlang des Pfeils B abgesaugt.

Die fertig dragierten Produkte werden nach dem Abstellen des Gebläses für die Luft, der Antriebseinheit der Trommel und der Fördereinrichtung für den Überzugsstoff durch die in dem Ende 6 der Trommel vorgesehene Öffnung nach dem Lösen des Deckels 45 entnommen. Die anschließende Reinigung des gesamten Innenraums 23 der Trommel kann einfach und schnell durch die Trommelöffnung 53 erfolgen. Dazu werden die Abluftkanäle 22 vorzugsweise abschnittsweise von der Innenwand 25 der Trommel gelöst und außerhalb dieser gereinigt. Über die Teleskopführung 42 können auch die zweiten Abschnitte 36, 37 von dem ersten Abschnitt 35 des Zuluftkanals 34 unproblematisch getrennt werden, so daß diese auch außerhalb der Trommel gesäubert werden können. Das gleiche gilt für die an der Innenseite des Deckels 45 befestigte Einrichtung 21 zum Besprühen der Produkte, die sich bei von der Trommel abgenommenem Deckel ohnehin außerhalb des Innenraums der Trommel befindet.

Damit ist der Betrieb einer Vorrichtung zum Dragieren von stückigen Produkten stark vereinfacht und die Reinigungssicherheit erhöht.

## Patentansprüche

1. Vorrichtung zum Dragieren von stückigen Produkten, insbesondere Pillen und Tabletten,
mit einer drehbaren Trommel (3),
einer Einrichtung (17) zum Zuführen von Luft in die Trommel,
einer Einrichtung (20) zum Abführen von Luft aus der Trommel, welche wenigstens einen Abluftkanal (22) aufweist, der zumindest eine zum Innenraum (23) der Trommel hin weisende Luftdurchtrittsöffnung (24) hat, und
mit einer Einrichtung (21) zum Besprühen der in der Trommel befindlichen Produkte (2) mit einem Überzugsstoff,
dadurch **gekennzeichnet,**
daß sich der wenigstens eine Abluftkanal (22) längs zumindest eines Teils der Innenwand (25) der Trommel (3) erstreckt und mit dieser lösbar verbunden ist.

2. Vorrichtung nach Anspruch 1,
dadurch **gekennzeichnet,**
daß der wenigstens eine Abluftkanal (22) sich nahezu über die gesamte Länge der Innenwand (25) der Trommel (3) erstreckt.

3. Vorrichtung nach Anspruch 1 oder 2,
dadurch **gekennzeichnet,**
daß der wenigstens eine Abluftkanal (22) mehrere miteinander verbundene, in Längsrichtung der Trommel (3) hintereinander angeordnete Abschnitte (26, 27, 28) aufweist.

4. Vorrichtung nach einem der vorhergehenden Ansprüche,
dadurch **gekennzeichnet,**
daß der wenigstens eine Abluftkanal (22) als Schikane, vorzugsweise im Fischgrätenmuster, zur Durchmischung der Produkte (2) ausgebildet ist.

5. Vorrichtung nach einem der vorhergehenden Ansprüche,
dadurch **gekennzeichnet,**
daß mehrere in Umfangsrichtung gleichmäßig über die Innenwand (25) der Trommel (3) verteilte Abluftkanäle (22) vorgesehen sind.

6. Vorrichtung nach einem der vorhergehenden Ansprüche,
dadurch **gekennzeichnet,**
daß jeder Abluftkanal (22) einen zumindest dreieckigen Querschnitt aufweist und die Luftdurchtrittsöffnungen (24) in einer oder mehreren der zum Innenraum (23) der Trommel (3) weisenden Seitenwand/Seitenwänden (30, 31) des Kanals angeordnet sind.

7. Vorrichtung nach Anspruch 6,
dadurch **gekennzeichnet,**
daß die in Drehrichtung der Trommel (3) vordere Seitenwand (30) des wenigstens einen Abluftkanals (22) mit der einen Teil des Abluftkanals (22) bildenden Innenwand (25) der Trommel (3) einen größeren Winkel (α) als die in Drehrichtung hintere Seitenwand (31) einschließt.

8. Vorrichtung nach einem der vorhergehenden Ansprüche,
dadurch **gekennzeichnet,**
daß die Anzahl und/oder die Form der Luftdurchtrittsöffnungen (24) über die Länge des wenigstens einen Abluftkanals (22) derart festgelegt sind, daß die Gesamtfläche der Luftdurchtrittsöffnungen (24) in einem bestimmten Abschnitt des Kanals der Menge der diesem Abschnitt zugeordneten Produkte etwa proportional ist.

9. Vorrichtung nach einem der vorhergehenden Ansprüche,
dadurch **gekennzeichnet,**
daß die Abluft aus dem Abluftkanal (22) dann abgezogen wird, wenn sich dieser etwa im Bereich der unteren Totpunktlage der Trommel (3) befindet.

10. Vorrichtung nach einem der vorhergehenden Ansprüche,
dadurch **gekennzeichnet,**
daß die Einrichtung (17) zum Zuführen der Luft in die Trommel (3) einen Zuluftkanal (34) aufweist, der einen parallel zur Längsachse (4) der Trommel (3) sich erstreckenden ersten Abschnitt (35) und wenigstens einen damit verbundenen, etwa in der Längsmitte der Trommel zur Innenwand (25) der Trommel hin umgebogenen zweiten Abschnitt (36, 37) hat, dessen freies Ende (40, 41) düsenartig ausgebildet ist und zumindest beim Dragieren der Produkte in die Produktcharge hineinreicht.

11. Vorrichtung nach Anspruch 10,
dadurch **gekennzeichnet,**
daß das freie Ende (40, 41) des zweiten Abschnitts (36, 37) des Zuluftkanals (34) derart angeordnet und ausgebildet ist, daß die Luft etwa tangential in das in der Trommel (3) abrollende Produkt (Pfeile D) eingeleitet wird.

12. Vorrichtung nach Anspruch 10 oder 11,
dadurch **gekennzeichnet,**
daß die Länge des ersten Abschnitts (35) und die Länge des sich quer zur Längsachse (4) der Trommel (3) erstreckenden zweiten Abschnitts (36, 37) des Zuluftkanals (34) mittels einer Teleskopführung (42) veränderbar ist.

13. Vorrichtung nach einem der vorhergehenden Ansprüche,
dadurch **gekennzeichnet,**
daß die Einrichtung (21) zum Besprühen der Produkte einen Sprühkanal (43) aufweist, dessen eines Ende (44) an einem die Trommel (3) verschließenden Deckel (45) gehalten ist und dessen anderes, freies Ende (46) etwa in der Längsmitte der Trommel zur Innenwand (25) der Trommel hin umgebogen, düsenartig ausgebildet sowie oberhalb der Produktcharge und zu dieser weisend angeordnet ist.

14. Vorrichtung nach Anspruch 13,
dadurch **gekennzeichnet,**
daß der Sprühkanal (43) im Bereich seines einen Endes (44) mittels einer Teleskopführung (51) an dem Deckel (45) befestigt ist.

15. Vorrichtung zumindest nach den Ansprüchen 1, 10 und
13, dadurch **gekennzeichnet,**
daß der Zuluft- und der Abluftkanal (34, 22) mit dem einen Ende (5) der Trommel (3) und der Sprühkanal (43) mit dem durch den Deckel (45) verschließbaren gegenüberliegenden anderen Ende (6) der Trommel (3) verbunden ist.
